# EUROPEAN PATENT SPECIFICATION

(11) **EP 2 560 924 B1**
(45) Date of publication and mention of the grant of the patent: **28.01.2015**
(21) Application number: 11723125.8
(22) Date of filing: 21.04.2011
(51) Int. Cl.: C02F 11/12, C02F 11/18

(54) **SLUDGE TREATMENT SYSTEM AND METHOD**
VORRICHTUNG UND VERFAHREN ZUR SCHLAMMBEHANDLUNG
SYSTÈME ET PROCÉDÉ DE TRAITEMENT DE BOUE

(30) Priority: 21.04.2010 ZA 201002800
(43) Date of publication of application: 27.02.2013
(73) Proprietor: The Warb Trust (no. 1 Trust 13337/99), Greenhills 1759 Randfontein (ZA); Ethekwini Municipality, 4001 Durban (ZA)
(72) Inventor: BUISMAN, Reindert, 1759 Randfontein (ZA); HARRISON, John Linden, 4051 Durban (ZA); WILSON, David Anthony, 4051 Durban (ZA); ALBOROUGH, Howard, 7349 Atlantis (ZA)
(74) Representative: Cooney, Daniel Thomas
(86) International application number: PCT/IB2011/051749
(87) International publication number: WO 2011/132170

(56) References cited:
- WO-A1-97/01513

## Description

### INTRODUCTION AND BACKGROUND

This invention relates to an input material treatment apparatus and an associated method and more particularly to a sludge treatment apparatus or plant, and associated method.

In some human settlements, mainly informal settlements in rural areas, modern sewage systems comprising sewers are not yet available. In these settlements, septic tanks, or even more primitive pits or other receiving mechanisms, are used as lavatories, to collect waste. Sewage removal service providers intermittently empty the tanks and remove, by means of road-going tankers, the sewage and deposit same in a designated desolate area. The sewage is often accompanied by other waste disposables such as fabrics, plastics, glass, wood, steel and other debris called detritus. The deposited sewage and detritus form a body which is exposed to the elements, and which body may become relatively solid towards a top surface region thereof and which may be more liquidus towards the bottom thereof. This body of sewage does not degrade properly or fast enough, and often is a source or breeding ground for health threatening organisms.

The available apparatus for and methods of separating oversized materials from sludge or clay-like waste are also not always satisfactory in some applications.

### OBJECT OF THE INVENTION

Accordingly, it is an object of the present invention to provide an apparatus and an associated method with which the applicant believes the aforementioned disadvantages may at least be alleviated or which may provide a useful alternative for the known systems or plants and associated methods.

### SUMMARY OF THE INVENTION

According to the invention there is provided apparatus for treating a body of an input material comprising an extrudable part and a non-extrudable part, the apparatus comprising:
- at least one extruding assembly comprising a body defining a passage for the input material and an extruder for converting the extrudable part of the input material into an extruded part; and
- the extruder being located downstream of an inlet for the input material to the passage and upstream from a first outlet from the passage for the extruded part and a second outlet from the passage for a non-extrudable part of the input material.

The apparatus may comprise a mechanism cooperating with the passage for directing the extruded part to the first outlet and the non-extrudable part to the second outlet.

The material may be a sludge, clay or the like and the extruded part may comprise elongate flexible bodies.

In the case of a sludge, the sludge may comprise 10 to 60% solids. In one preferred application, the apparatus may be used to treat a sludge in the form of sewage and the sewage may comprise 10 to 50% solids.

The apparatus comprises first means for receiving the extruded part cooperating with the first outlet and second means for receiving the non-extrudable part cooperating with the second outlet.

The extruder arrangement and the first receiving means may be movable relative to one another.

In one embodiment of the apparatus, the extruder arrangement may be stationary and the first receiving means may comprise a sieve. The sieve may form part of a conveyor. The extruder arrangement may be mounted above the conveyor and the extruded part may be deposited through the first outlet and under the influence gravity onto the conveyor.

The conveyor may comprise a perforated belt, preferable a perforated steel belt. The conveyor may be endless and may comprise a first linear run or part extending between a first end thereof below the first outlet and a second end thereof remote from the first end, and a return run or part.

The extruder arrangement may comprise an input material receiving part, which may be in the form of a hopper.

The extruder may comprise a material feeding device, such as a vaned screw or auger, at least partially located in a perforated region of the extruder assembly body, to cooperate with the perforated region.

The extruder assembly body may comprise a sleeve comprising a sidewall and at least part of the sidewall may be perforated to provide the perforated region and first outlet.

The sleeve may comprise a tail-piece downstream of the perforated region and defining the second outlet at a distal end thereof. The directing mechanism may comprise a normally closed, but openable door between the perforated region and the tailpiece.

The door may be biased by a biasing mechanism, for example by a spring, towards a normally closed position.

The sleeve may be elongate having a diameter of between 50 and 500mm and the perforations in the side wall of the sleeve may have a diameter of between 1 and 20mm.

The feeding device may have a main axis and the main axis may extend parallel to a main axis of the conveyor. In these embodiments the tail-piece may curve or extend away from the main axis of the feeding means, so that the non-extrudable part of the input material may be deposited through the second outlet transversely away from the first means for receiving the extruded part.

In other embodiments, the main axis of the feeding device may be transverse to the main axis of the conveyor. More particularly, in some embodiments, the main axis of the feeding device may be perpendicular to the main axis of the conveyor.

The extruding arrangement may comprise at least two similar extruding assemblies. The assemblies may be mounted parallel to one another.

The apparatus may comprise a first path for hot air extending above the first part of the conveyor.

The apparatus may comprise a second path for hot air extending below the first part of the conveyor.

The first and/or second paths may extend between a respective inlet for hot air towards the second or remote end of the first part of the conveyor and an outlet for hot air towards the first end of the first part of the conveyor.

Also included within the scope of the present invention is a method of treating a body of an input material comprising an extrudable part comprising a sludge or clay and a non-extrudable part, the method comprising the steps of:
- extruding the extrudable part and presenting the extruded part at a first outlet;
- whilst extruding, separating the non-extrudable part from the extrudable part; and
- making the non-extrudable part available.

The method may comprise the further step of conveying the extruded part in a first direction and exposing the extruded part to heat, to dry the extruded part.

The heat may be provided by hot air derived from a power source, such as an internal combustion engine.

The extruded part may be exposed to hot air from underneath.

Alternatively or in addition, the extruded part may be exposed to hot air from above.

The hot air may be caused to flow past the extruded part in a second direction, which is opposite to the first direction.

Alternatively or in addition, the method may also comprise the step conveying the non-extrudable part for further processing.

### BRIEF DESCRIPTION OF THE ACCOMPANYING DIAGRAMS

The invention will now further be described, by way of example only, with reference to the accompanying diagrams wherein:
- figure 1: is a side elevation of a sludge treating system;
- figure 2: is a similar view of a first stage of the system in figure 1;
- figure 3: is a more detailed side view of an extruding arrangement and a conveyor of the system;
- figure 4: is a still more detailed side view of the extruding arrangement and conveyor;
- figure 5: is a perspective view of an alternative embodiment of the extruding arrangement;
- figure 6: is a partial plan view of the alternative embodiment; and
- figure 7: is a diagrammatic side elevation of another embodiment of the system.

### DESCRIPTION OF A PREFERRED EMBODIMENT OF THE INVENTION

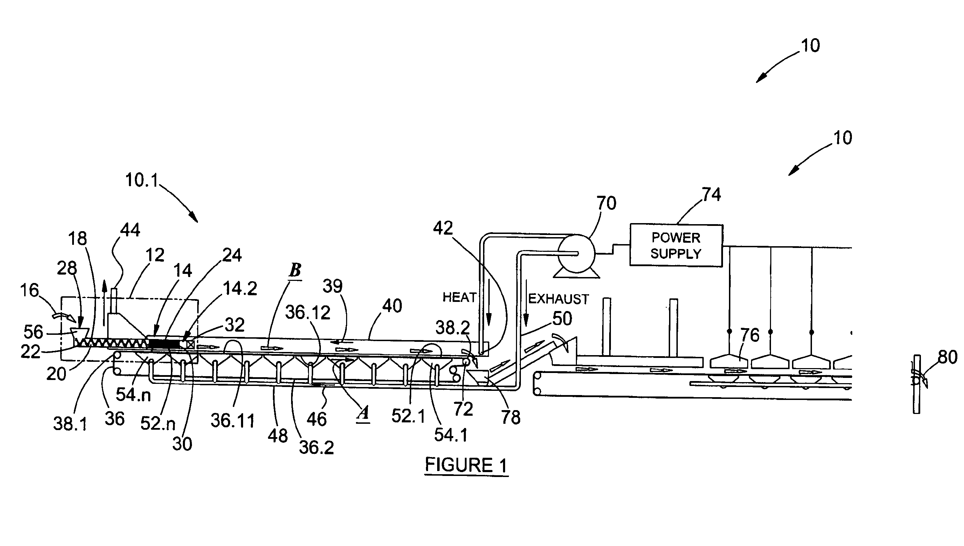

A system for treating a body of an input material comprising an extrudable part, such as a sludge or clay and a non-extrudable part, is generally designated by the reference numeral 10 in figure 1.

In the embodiments hereinafter described by way of non-limiting examples, the input material is a sludge in the form of sewage, which comprises an extrudable part comprising 10%-50% solids and foreign non-extrudable matter or detritus, such as rags, stones, glass etc.

In the embodiment of figure 1, the system comprises a first stage 10.1 and a second stage 10.2. In this embodiment, apparatus 12 for treating a sludge forms part of the first stage 10.1. The second stage 10.2 is described in the specification of South African Patent 2009/02227, the contents of which is incorporated herein and which stage will not be described in detail hereinafter.

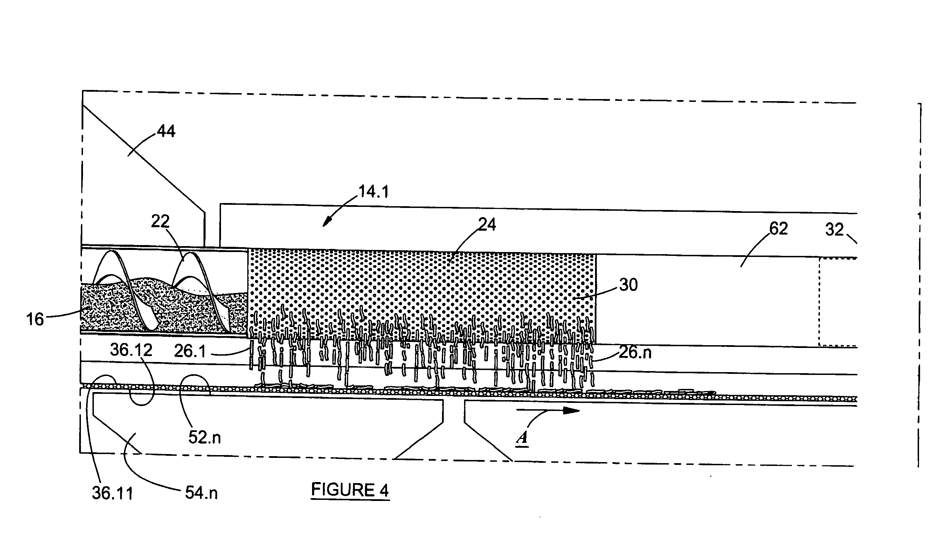

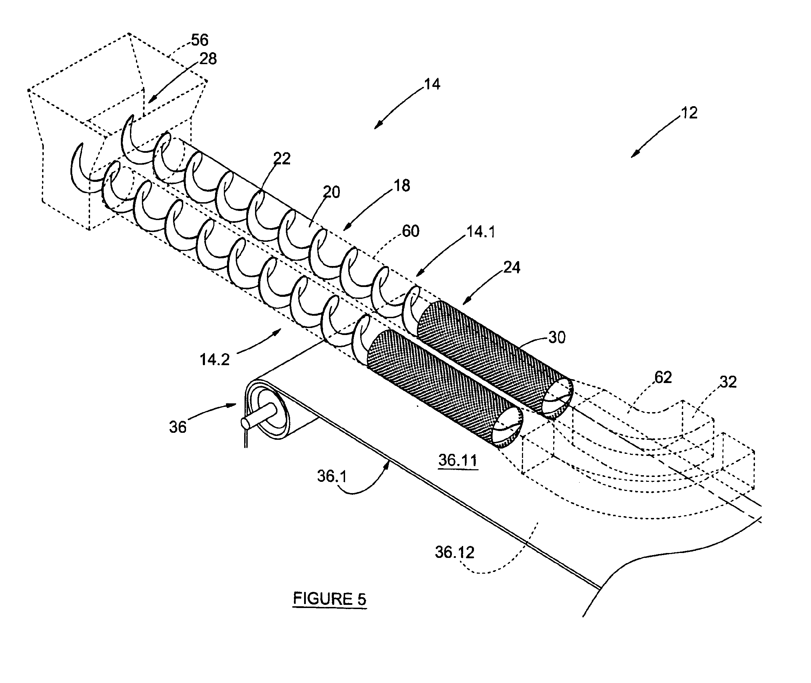

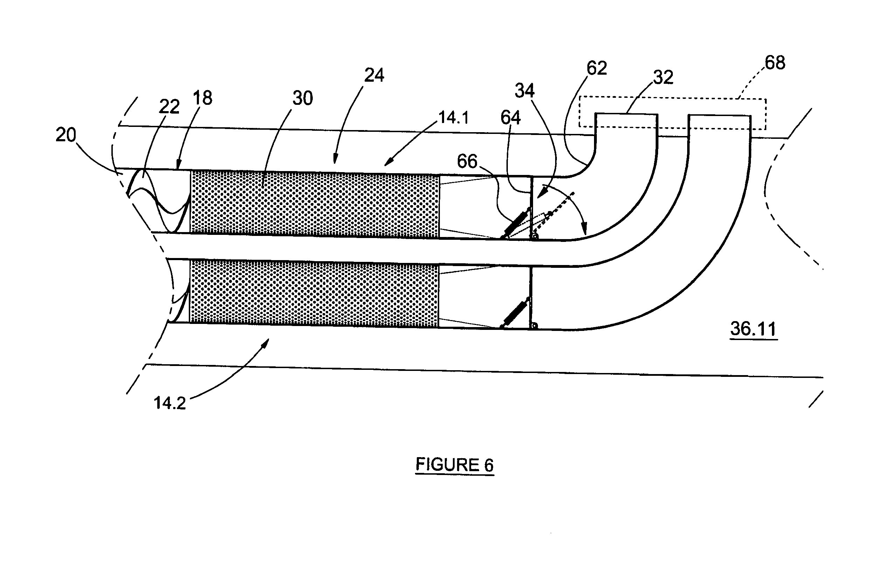

Referring to figures 1, 2, 5 and 6, the apparatus 12 comprises an extruding arrangement 14 comprising at least one extruding assembly 14.1, 14.2 for extruding the input sewage 16. Each extruding assembly 14.1 comprises a body 18 defining a passage 20 for the input material and an extruder 22,24 for converting the extrudable part of the input material into an extruded part 26.1 to 26.n (shown in figure 4). The extruder is located downstream of an inlet 28 for the input material to the passage 20 and upstream from a first outlet 30 from the passage for the extruded part and a second outlet 32 from the passage for the non-extrudable part of the input material. A mechanism 34 (best shown in figure 6) cooperates with the passage 20 to direct the extruded part to the first outlet 30 and the non-extrudable part to the second outlet 32.

First means for receiving the extruded part 26.1 to 26.n, in this example embodiment in the form of a conveyor 36, is provided in cooperating relationship with the first outlet 30. The conveyor 36 comprises an endless perforated steel belt having a substantially horizontal first section 36.1 and a vertically spaced return section 36.2. The first section extends between a first end 38.1 underneath the extruding arrangement 14 and a second end 38.2 remote therefrom. The first section has a first face 36.11 facing upwardly and towards the extruding arrangement 14 and an opposite second face 36.12.

A first path 39 for hot air is defined by a duct or hood 40 above the first face 36.11. The path 39 communicates with the first face 36.11 and extends from an inlet 42 for hot air towards the second end 38.2 of the first section 36.1 of the conveyor 36 to an exit 44 for hot air towards the first end 36.1 of the first section.

A second path 46 for hot air is defined by ducting 48 underneath the second face 36.12. The ducting 48 comprises an inlet 50 for hot air towards the second end 38.2 and at least one, but preferably a plurality of linearly distributed outlets 52.1 to 52.n provided by liquid sumps 54.1 to 54.n located underneath the second face 36.12 of the first section 36.1 of the conveyor 36.

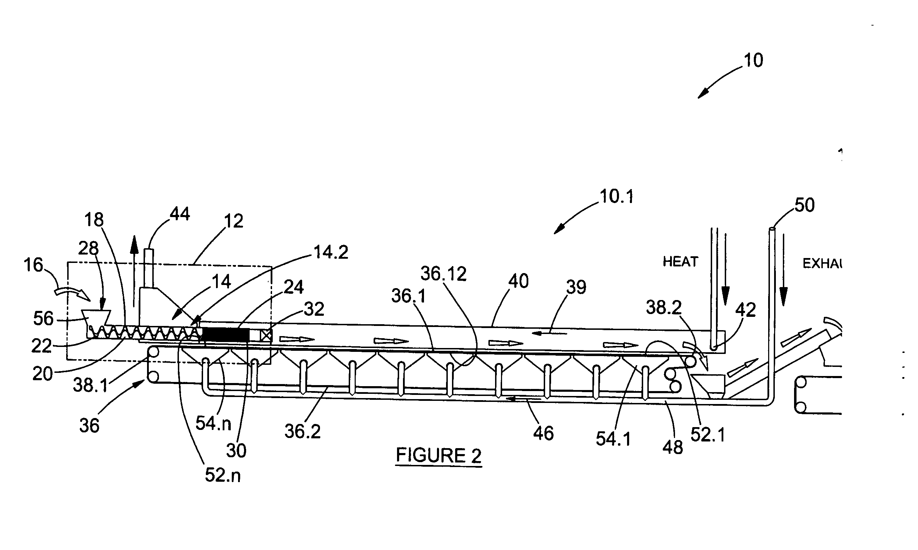

Hence, and as best shown in figure 2, there is provided above first part 36.1 of the conveyor 36 the first path 39 for hot air extending from inlet 42 to outlet 44. The second path 46 is provided below the first part 36.1 of the conveyor 36 and extends from inlet 50 via ducting 48, outlets 52.1 to 52.n and at least part of the first path 39, to the outlet 44.

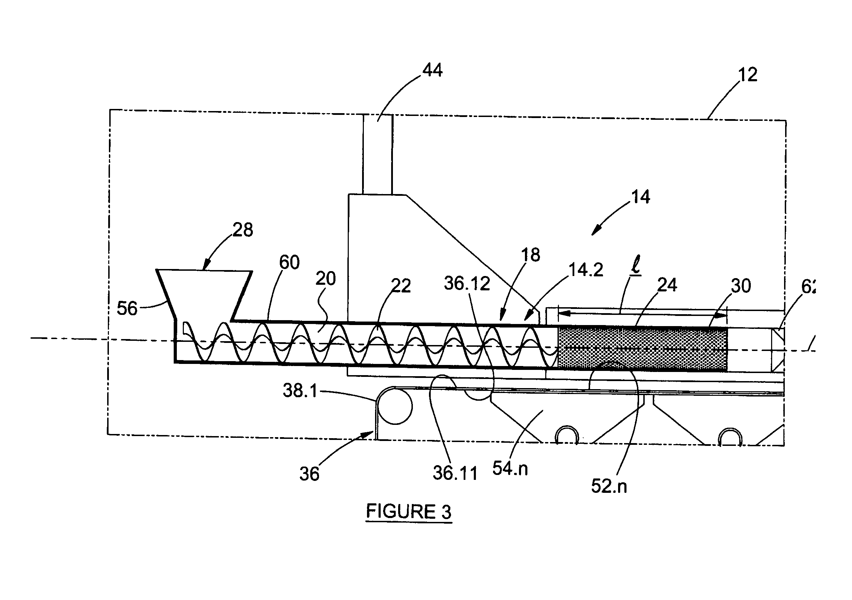

Referring to figures 3, 5 and 6, the extruding arrangement 14 comprises an input material receiving part in the form of a hopper 56 defining the inlet 28 and at least one extruding assembly 14.1 and 14.2. Each extruding assembly 14.1 comprises a material feeding or displacement device such as a vaned screw conveyor or auger 22, preferably without a centre shaft or axle located in the passage 20. The auger 22 has a main axis 58. In the embodiment shown, the passage defining body 18 comprises a sleeve having a sidewall 60 with a perforated region 24 having a length l (as shown in figures 3 and 4) forming part of the extruder and serving as the first outlet 30 intermediate the inlet 28 and the second outlet 32. Unexpectedly, good results were obtained when the auger terminates at about halfway through the length of the perforated region 24. The sleeve 18 comprises a tail piece 62 downstream of the perforated region 24 and which, at a distal end thereof defines the second outlet 32.

The aforementioned directing mechanism 34 is best shown in figure 6 and is mounted in the passage 20 downstream of the first outlet 30. The mechanism comprises a normally closed door 64 hinged to the body 18 and located in the passage 20 to close the passage downstream of the first outlet 30 and upstream from the second outlet 32. The door 64 is biased towards the normally closed position by a biasing device, such as a spring 66, for example.

In this example embodiment, the extruding arrangement 14 and conveyor 36 are arranged such that the main axis 58 of the auger is parallel with a main axis of the first part 36.1 of the conveyor. Further, in this example embodiment, the tail-piece 62 may comprise an elbow or be otherwise curved to extend away from the main axis 58, so that the second outlet 32 is in communication with a second receiving means 68 transversely spaced from the conveyor 36.

Referring to figure 1, there may be provided a power source, such as an internal combustion engine 70 for parts of the system 10. Such parts may include drive wheels 72 for the endless conveyor 36 and the augers 22. The engine may also drive a generator 74 for generating electricity for driving electrical parts or components of the system 10. Such parts may include infra-red sources 76 forming part of the second stage 10.2.

As shown in figure 2, an exhaust system (not shown) of the engine 70 is connectable to the inlet 50 of the ducting 48 providing the aforementioned second path 46 for hot air, so that hot air delivered by the exhaust system, typically at about 450°C, is ducted along the second path 46. Hot air, typically at about 70°C, obtained from a heat exchange system, such as a radiator (not shown) for the engine, is connected to inlet 42 of first path 39.

In use, the hot air from the engine 70 is connected as aforesaid. The endless conveyor 36 is caused to move in a clock-wise direction A and the augers 22 are driven to rotate about their main axes 58. The sludge 16 to be treated is received at hopper 56 into the system 10, and more particularly into the apparatus 12 of the first stage 10.1. The sludge is extruded by the extruder arrangement 14 into a plurality of elongate flexible bodies 26.1 to 26.n shown in figure 4. The extruded elongate bodies 26.1 to 26.n are deposited under the influence of gravity on the first face 36.11 of the first part 36.1 of the conveyor 36. The deposited bodies form a vented mass on the conveyor and a resulting enlarged surface area of the mass (as opposed to that of the original sludge body) is exposed to the hot air moving along the first and second paths, to dry the mass. The mass is conveyed as shown at B towards the second or remote end 38.2 of the first part 36.1. At the second end, the at least partially dried mass drops and disintegrates into cakes which are received in a receptacle 78.

From the receptacle, the cakes are conveyed to the second stage 10.2 for further drying in the second stage. The dried material is made available at an output 80 of the system.

The non-extrudable part of the input material is fed by the auger 22 towards the door 64. Pressure and a force exerted by this material as it builds up over time, causes the door to open against its bias and trailing non-extrudable material forces leading non-extrudable material along the tail piece 62 and out through the second outlet 32. The extruded part and non-extrudable parts are hence automatically separated and the second receiving means 68 adjacent the second outlet 32 may be configured to convey the non-extrudable part to waste, alternatively for further processing.

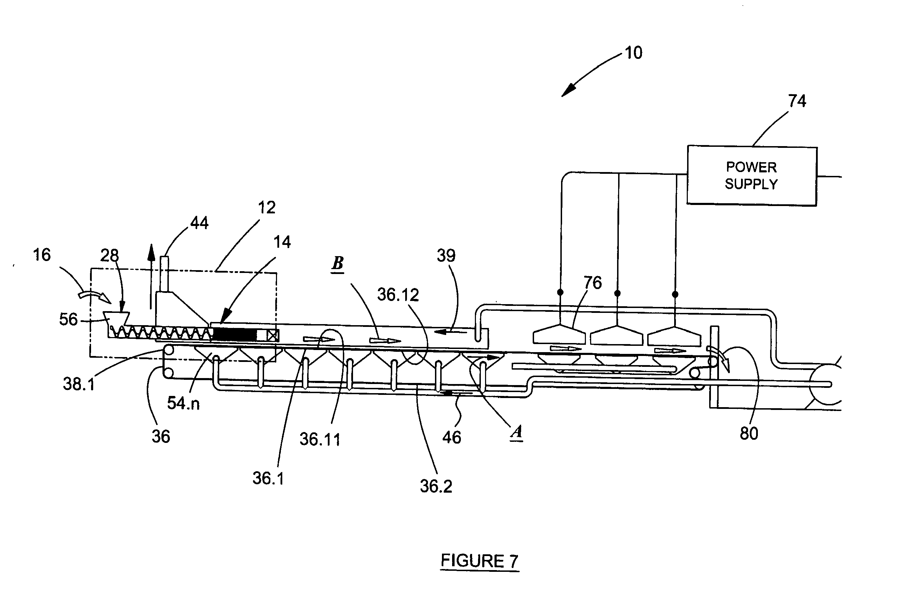

In figure 7 there is shown a self-explanatory diagram of a second embodiment of the system 10 wherein at least some of the additional drying means 76 of the aforementioned second stage 10.2 are incorporated in the first stage, so that a single conveyor 36 may be used.

It will be appreciated that there are many variations in detail on the system, apparatus and method according to the invention without departing from the scope of the appended claims. More particularly, the extruding arrangement and method according to the invention may be used to separate a non-extrudable part of any suitable input material from an extrudable part thereof. The input material may be a mineral carrying clay or the like, and in such applications, the extruded clay may be conveyed to waste and the non-extrudable minerals may be conveyed from the second outlet 32 for further processing.

## Claims

1. Apparatus for treating a body of an input material comprising an extrudable part comprising a sludge or clay and a non-extrudable part, the apparatus comprising:
- at least one extruding assembly comprising a body defining a passage for the input material and an extruder for converting the extrudable part into an extruded part;
- the extruder being located downstream of an inlet for the input material to the passage and upstream from a first outlet from the passage for the extruded part which first outlet is defined in a sidewall of the passage and a second outlet from the passage for the non-extrudable part which second outlet is downstream from the first outlet; and
means for receiving the extruded part which means comprises a conveyor in cooperating relationship with the first outlet for conveying the extruded part.

2. Apparatus as claimed in claim 1 comprising a mechanism cooperating with the passage for directing the extruded part to the first outlet and the non-extrudable part to the second outlet.

3. Apparatus as claimed in claim 1 or claim 2 comprising means for receiving the non-extrudable part cooperating with the second outlet.

4. Apparatus as claimed in any one of claims 1 to 3 wherein the extruder arrangement is mounted above the conveyor and wherein the extruded part is deposited through the first outlet and under the influence gravity onto the conveyor.

5. Apparatus as claimed in any one of claims 1 to 4 wherein the conveyor comprises an endless perforated steel belt having a first part for receiving the extruded part and a return part.

6. Apparatus as claimed in any one of the preceding claims wherein the extruder comprises a material feeding device which is at least partially located in a perforated region of the body of the extruder assembly to cooperate with the perforated region.

7. Apparatus as claimed in claim 6 wherein the body of the extruder assembly comprises a sleeve comprising a sidewall and wherein at least part of the sidewall is perforated to provide the perforated region, which forms the first outlet.

8. Apparatus as claimed in claim 7 wherein the sleeve comprises a tail-piece downstream of the perforated region and defining the second outlet.

9. Apparatus as claimed in claim 8 wherein the directing mechanism comprises a normally closed, but openable door between the perforated region and the second outlet.

10. Apparatus as claimed in claim 9 wherein the door is normally biased by biasing means towards a closed position.

11. Apparatus as claimed in any one of claims 5 to 10 comprising a first path for hot air extending above the first part of the endless perforated steel belt.

12. Apparatus as claimed in any one of claims 5 to 11 comprising a second path for hot air extending below the first part of the endless perforated steel belt.

13. A method of treating a body of an input material comprising an extrudable part comprising a sludge or clay and a non-extrudable part, the method comprising the steps of:
- moving the input material along a passage;
- extruding the extrudable part and presenting the extruded part through a first outlet from the passage which is defined in a sidewall of the passage;
- whilst extruding, separating the non-extrudable part from the extrudable part; and
- making the non-extrudable part available downstream of the first outlet.

14. A method as claimed in claim 13 comprising the step of conveying the extruded part in a first direction and exposing the extruded part to heat, to dry the extruded part,
and optionally wherein the heat is provided from at least one of a first side of the extruded part and an opposite side of the extruded part and wherein the hot air is caused to flow past the extruded part in a second direction, which is opposite to the first direction.

15. A method as claimed in claim 13 comprising the step of conveying the non-extrudable part for further processing.

## Patentansprüche

1. Vorrichtung zur Behandlung eines Körpers eines Eingangsmaterial umfassend einen extrudierbaren Teil, welcher einen Schlamm oder Lehm umfasst, und einen nicht extrudierbaren Teil, wobei die Vorrichtung umfasst:
- mindestens eine Extrudieranordnung umfassend einen Körper, welcher einen Durchgang für das Eingangsmaterial definiert, und einen Extruder zum Überführen des extrudierbaren Teils in einen extrudierten Teil;
- den Extruder, welcher stromabwärts von einem Einlass für das Eingangsmaterial in den Durchgang und stromaufwärts von einem ersten Auslass von dem Durchgang für den extrudierten Teil, wobei der erste Auslass in einer Seitenwand des Durchgangs definiert ist, und einem zweiten Auslass von dem Durchgang für den nicht extrudierbaren Teil, wobei der zweite Auslass stromabwärts zu dem ersten Auslass ist, angeordnet ist; und
Mittel zum Aufnehmen des extrudierten Teils, wobei das Mittel ein Beförderungsmittel in einem zusammenarbeitenden Verhältnis mit dem ersten Auslass zum befördern des extrudierten Teils umfasst.

2. Vorrichtung nach Anspruch 1, umfassend einen Mechanismus, welcher mit dem Durchgang zum Leiten des extrudierten Teils zu dem ersten Auslass und des nicht-extrudierbaren Teils zu dem zweiten Auslass zusammenarbeitet.

3. Vorrichtung nach Anspruch 1 oder Anspruch 2, umfassend ein Mittel zum Aufnehmen des nicht extrudierbaren Teils, welches mit dem zweiten Auslass zusammenarbeitet.

4. Vorrichtung nach einem der Ansprüche 1 bis 3, wobei die Extruderanordnung über dem Beförderungsmittel angebracht ist und wobei der extrudierte Teil durch den ersten Auslass und unter dem Einfluss der Schwerkraft auf das Beförderungsmittel abgesetzt wird.

5. Vorrichtung nach einem der Ansprüche 1 bis 4, wobei das Beförderungsmittel einen endlosen perforierten Stahlgurt umfasst, welcher einen ersten Teil zum Aufnehmen des extrudierten Teils und einen Rücklaufteil aufweist.

6. Vorrichtung nach einem der vorhergehenden Ansprüche, wobei der Extruder eine Materialführungsvorrichtung umfasst, welche zumindest teilweise in einem perforierten Bereich des Körpers der Extruderanordnung angeordnet ist, um mit dem perforierten Bereich zusammenzuarbeiten.

7. Vorrichtung nach Anspruch 6, wobei der Körper der Extruderanordnung eine Hülse umfasst, welche eine Seitenwand umfasst, und wobei mindestens ein Teil der Seitenwand perforiert ist, um den perforierten Bereich bereitzustellen, welcher den ersten Auslass bildet.

8. Vorrichtung nach Anspruch 7, wobei die Hülse ein Endteil umfasst, welches stromabwärts von dem perforierten Bereich angeordnet ist und den zweiten Auslass definiert.

9. Vorrichtung nach Anspruch 8, wobei der Leitmechanismus eine normalerweise geschlossene, aber öffenbare Tür zwischen dem perforierten Bereich und dem zweiten Auslass umfasst.

10. Vorrichtung nach Anspruch 9, wobei die Tür normalerweise mittels eines Vorspannmittels in Richtung einer geschlossenen Position vorgespannt ist.

11. Vorrichtung nach einem der Ansprüche 5 bis 10, umfassend einen ersten Pfad für heiße Luft, welcher sich über dem ersten Teil des endlosen perforierten Stahlgurts erstreckt.

12. Vorrichtung nach einem der Ansprüche 5 bis 11, umfassend einen zweiten Pfad für heiße Luft, welcher sich unterhalb des ersten Teils des endlosen perforierten Stahlgurts erstreckt.

13. Verfahren zum Behandeln eines Körpers eines Eingangsmaterials umfassend einen extrudierbaren Teil, welcher Schlamm oder Lehm umfasst, und einen nicht-extrudierbaren Teil, wobei das Verfahren die Schritte umfasst:
- Bewegen des Eingangsmaterials entlang eines Durchgangs;
- Extrudieren des extrudierbaren Teils und Ausgeben des extrudierten Teils durch einen ersten Auslass von dem Durchgang, welcher in einer Seitenwand des Durchgangs definiert ist;
- Trennen des nicht-extrudierbaren Teils von dem extrudierbaren Teil während des Extrudierens; und
- Zur-Verfügung-Stellen des nicht-extrudierbaren Teils stromabwärts von dem ersten Auslass.

14. Verfahren nach Anspruch 13, umfassend den Schritt eines Beförderns des extrudierten Teils in einer ersten Richtung und Aussetzen des extrudierten Teils einer Wärme, um den extrudierten Teil zu trocknen,
und wobei optional die Wärme von einer ersten Seite des extrudierten Teils und/oder einer gegenüberliegenden Seite des extrudierten Teils bereitgestellt wird, und wobei bewirkt wird, dass heiße Luft an dem extrudierten Teil in einer zweiten Richtung, welche entgegengesetzt zu der ersten Richtung ist, vorbeiströmt.

15. Verfahren nach Anspruch 13, umfassend den Schritt eines Beförderns des nicht-extrudierbaren Teils für eine weitere Verarbeitung.

## Revendications

1. Appareil pour traiter une masse d'un matériau d'apport comprenant une partie extrudable composée de boues ou d'argile et une partie non extrudable, l'appareil comportant
- au moins un système d'extrusion comprenant un corps définissant un passage pour le matériau d'apport et une extrudeuse pour transformer la partie extrudable et ainsi obtenir une partie extrudée ;
- l'extrudeuse étant située en aval d'une entrée du passage pour le matériau d'apport et en amont d'une première sortie du passage pour la partie extrudée, laquelle première sortie étant définie dans une paroi latérale du passage, et d'une seconde sortie du passage pour la partie non extrudable, laquelle seconde partie étant en aval de la première sortie ; et
- un moyen pour recevoir la partie extrudée, lequel moyen comprenant un convoyeur coopérant avec la première sortie pour acheminer la partie extrudée.

2. Appareil selon la revendication 1, comportant un mécanisme coopérant avec le passage pour guider la partie extrudée jusqu'à la première sortie et la partie non extrudable jusqu'à la seconde sortie.

3. Appareil selon la revendication 1 ou la revendication 2, comportant un moyen pour recevoir la partie non extrudable, coopérant avec la seconde sortie.

4. Appareil selon l'une quelconque des revendications 1 à 3, dans lequel le système d'extrudeuse est monté au-dessus du convoyeur, et dans lequel la partie extrudée se dépose sur le convoyeur via la première sortie et sous l'effet de la pesanteur.

5. Appareil selon l'une quelconque des revendications 1 à 4, dans lequel le convoyeur comprend une bande perforée ininterrompue en acier possédant une partie de retour et une première partie destinée à recevoir la partie extrudée.

6. Appareil selon l'une quelconque des revendications précédentes, dans lequel l'extrudeuse comprend un dispositif d'alimentation en matériau situé au moins partiellement dans une région perforée du corps du système d'extrudeuse afin de coopérer avec la région perforée.

7. Appareil selon la revendication 6, dans lequel le corps du système d'extrudeuse comprend un manchon doté d'une paroi latérale, et dans lequel au moins une partie de la paroi latérale est perforée pour constituer la région perforée, ce que forme la première sortie.

8. Appareil selon la revendication 7, dans lequel le manchon comprend une pièce arrière en aval de la région perforée, définissant la seconde sortie.

9. Appareil selon la revendication 8, dans lequel le mécanisme de guidage comprend, entre la région perforée et la seconde sortie, une trappe normalement fermée mais pouvant s'ouvrir.

10. Appareil selon la revendication 9, dans lequel la trappe est normalement sollicitée vers une position fermée par un moyen de sollicitation.

11. Appareil selon l'une quelconque des revendications 5 à 10, comportant un premier circuit d'air chaud, s'étendant au-dessus de la première partie de la bande perforée ininterrompue en acier.

12. Appareil selon l'une quelconque des revendications 5 à 11, comportant un second circuit d'air chaud s'étendant sous la première partie de la bande perforée ininterrompue en acier.

13. Procédé pour traiter une masse d'un matériau d'apport comprenant une partie extrudable composée de boues ou d'argile et une partie non extrudable, le procédé comportant les étapes de :
- acheminement du matériau d'apport dans un passage ;
- extrusion de la partie extrudable et présentation de la partie extrudée via une première sortie du passage définie dans une paroi latérale du passage ;
- en même temps que l'extrusion, séparation de la partie non extrudable d'avec la partie extrudable ; et
- présentation de la partie non extrudable en val de la première sortie.

14. Procédé selon la revendication 13, comportant l'étape d'acheminement de la partie extrudée dans une première direction et d'exposition de la partie extrudée à de la chaleur afin de sécher la partie extrudée,
et éventuellement dans lequel de la chaleur est fournie d'un premier côté de la partie extrudée et/ou d'un côté opposé de la partie extrudée, et dans lequel l'air chaud est amenée à passer sur la partie extrudée dans une seconde direction, opposée à la première direction.

15. Procédé selon la revendication 13, comportant l'étape d'acheminement de la partie non extrudable afin qu'elle aille subir une nouvelle transformation.
